# EUROPEAN PATENT SPECIFICATION

(11) **EP 1 565 049 B1**
(45) Date of publication and mention of the grant of the patent: **14.02.2007**
(21) Application number: 03735736.5
(22) Date of filing: 25.06.2003
(51) Int. Cl.: A01B 49/06

(54) **DIRECT SOWING MACHINE**
DIREKTSAATMASCHINE
MACHINE DE SEMIS DIRECT

(30) Priority: 25.06.2002 FI 20021242
(43) Date of publication of application: 24.08.2005
(73) Proprietor: Vieskan Metalli Oy, 85200 Alavieska (FI)
(72) Inventor: Koutonen, Ari, FIN-85200 Alavieska (FI)
(74) Representative: Laurinolli, Tapio Kullervo
(86) International application number: PCT/FI2003/000515
(87) International publication number: WO 2004/000004

(56) References cited:
- DE-A1- 4 445 338
- DE-A1- 19 855 937
- US-A- 4 227 581
- US-A- 4 796 550
- US-A- 5 640 914

## Description

### FIELD OF THE INVENTION

The invention is related to a direct sowing machine.

### BACKGROUND OF THE INVENTION

With direct sowing, soil is not tilled at all before seeding but the seeding is made directly into the stubble of previous corp. Coulter disks pressed into the soil by the weight of coulter structures cut the soil and open furrows into which seeds are conducted.

On the field into which the seeding is made there are often straw residue spread unevenly over the surface of the field in connection with the previous threshing of the grain. At the ends of a field and stopping places of a thresher heaps of straw tend to be generated. The uneven straw coating and heaps of straw cause big difficulties for the operation of a seeding coulter.

At the places with the largest amount of straw, the weight of a coulter is enough for cutting the straw but not for cutting a furrow for seeding. Therefore, the depth of seeding varies according to the amount of straw on the surface of the field, and germination of the seed is uneven. In the heaps of straw, the seed are intermixed with straw and no germination occurs.

As the soil of a field is loose, a problem is also that straw is not cut by the weight of a coulter disk but is pressed into the bottom of the seeding furrow where it deteriorates germination of the seed as well.

Moreover, a copious and uneven coating of straw is harmful for the operation of direct sowing machines and causes coulter blockages.

### SUMMARY OF THE INVENTION

An object of the invention is to remove the above problems.

For achieving this object a direct sowing machine according to the invention comprising coulter structures including coulter disks for cutting and opening furrows in soil for conducting seed into there is characterised in that it comprises a rake in front of the coulter structures for levelling and removing off straw residue and other such matter from the way of the coulter disks.

In a preferred embodiment, the rake is consisting of tines placed in one or more rows.

For a coulter disk there is advantageously a corresponding tine placed in alignment with the coulter disk.

In one embodiment, the tines are directed obliquely backwards. The tines may be attached to lateral frames and be provided with a flexible structure.

A suspension between the rake and the sowing machine is advantageously floating.

The sowing machine may include means for adjusting hydraulically the position of the rake and means for adjusting the force with which the rake is pressed against the soil.

The tines of the rake clean the way of the coulter disks and level heaps of straw on the surface of a field whereby the coulter disks are pressed evenly into the soil and the result of the seeding is good and of uniform quality.

### BRIEF DESCRIPTION OF THE DRAWINGS

The invention and some embodiments thereof are described in further detail in the following with reference to the accompanying drawings, in which:
Fig. 1 is a side view of an embodiment of the direct sowing machine according to the invention:
Fig. 2 presents the rake according to the invention with the suspension thereof in the direct sowing machine of Fig. 1;
Fig. 3 is a plan view of the coulter structures of the direct sowing machine of Fig. 1 and the rake in front of them; and
Fig. 4 is a plan view of the rake of the direct sowing machine of Fig. 1 according to the invention.

### DETAILED DESCRIPTION OF THE INVENTION

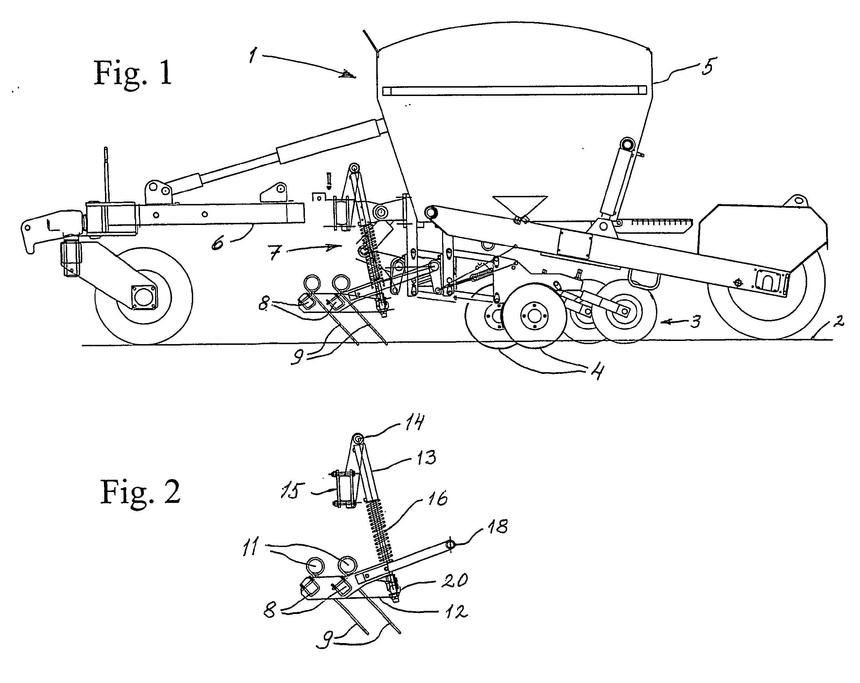

In describing the invention, essential parts of the direct sowing machine of Fig. 1 are the coulter structures 3, especially coulter disks 4, the function of which is to cut and open furrows in the soil into which seeds are conducted. Reference number 2 indicates the assumed level of the soil surface with sowing and reference number 5 indicates the container part of the sowing machine.

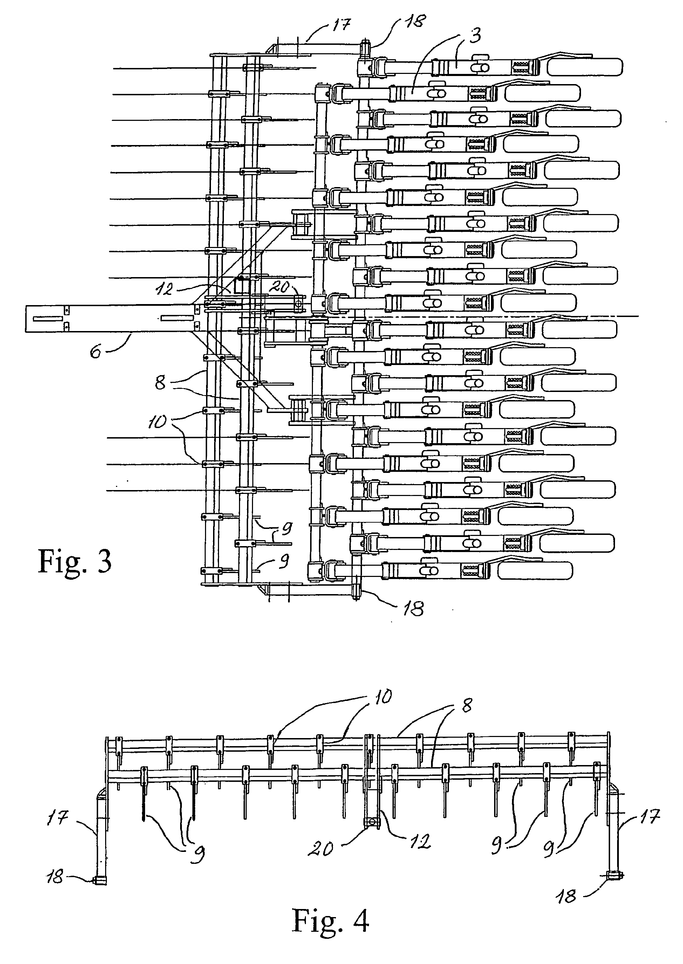

In Fig. 1, the rake according to the invention is indicated by reference number 7 and the tines of the rake by reference number 9. The rake is placed in front of the coulter structures 3 for which it is called "front rake" as well. As may be seen from Fig. 3, for each coulter 3 there is a specific tine 9 in the rake which is placed in alignment with the coulter so that it cleans as well as possible the place at which the coulter disc (under the coulter structure in plan view) is to cut a furrow. The tines are directed obliquely backwards and have at the fixing end a coil which give them flexibility necessary in view of the inequality of the soil. The tines 9 are attached to frame beams or pipes or similar parts 8 with a suitable attachment 10 which, advantageously, may be set at a desired point on the frame so that the tines may set as well as possible in alignment with the coulter disks 4. At the ends of the rake there are suspension arms 17 by means of which the rake is attached with pivotal attachments 18 to a coulter pressurising axle 19.

For providing an adjustable and floating suspension the rake includes in the middle also a frame structure 12 from which it is in the exemplary realisation suspended by means of an attachment 20, a hydraulic cylinder 13 and a spring 16 and some accessories (not described here in further detail) as well as an attachment and frame structure 14, 15 at the other end of the hydraulic cylinder on the drawbar 6 (Fig. 2) of the sowing machine. The position of the rake and the tines may be adjusted by means of the hydraulic cylinder 13. The force with which the rake is pressed against the soil may be adjusted by means of the spring 16. The suspension is floating, i.e. the rake follows the inequalities of the soil surface.

The front rake may be made stiff or adjustable. In the adjustable model, the rake is lifted as a whole on an attachment arm in relation to an attachment point. The attachment arm may be a single arm or a parallel-arm linkage. The adjustable rake may be realised so that the tines are lifted from the soil by adjusting the rake-tine angle. The attachment point may be also at the container frame or drawbar or also at a drawbeam to be attached to a tractor.

The tines of the rake may be attached to one, two or three frame beams, pipes or similar parts. The rake with more than one frame beam provide better penetration through the straw coating as the tines are positioned stepwise.

The shape of the tines of the rake may vary. The tines may be more or less S-shaped, for example, for making them to better remove off straw residue from the way of the coulter disks.

The invention may vary within the scope of the accompanying claims.

## Claims

1. A direct sowing machine comprising coulter structures (3) including coulter disks (4) for cutting and opening furrows in soil for conducting seed into there, **characterised in that** it comprises a rake (8, 9, 10, 11, 12, 17, 18, 20) in front of the coulter structures (3) for levelling and removing off straw residue and other such matter from the way of the coulter disks.

2. A direct sowing machine of claim 1, **characterised in that** the rake is consisting of tines (8, 9) placed in one or more rows.

3. A direct sowing machine of claim 2, **characterised in that** for a coulter disk (4) there is a corresponding tine (9) placed in alignment with the coulter disk.

4. A direct sowing machine of claim 2, **characterised in that** the tines (9) are directed obliquely backwards.

5. A direct sowing machine of claim 2, **characterised in that** the tines (9) are attached to lateral frames (8).

6. A direct sowing machine of claim 2, **characterised in that** the tines (9) are provided with a flexible structure (11).

7. A direct sowing machine of claim 1, **characterised in that** the rake is suspended on the sowing machine floatingly (12, 13, 14, 15, 16, 17, 18, 19, 20).

8. A direct sowing machine of claim 1, **characterised in that** it comprises means (13) for adjusting hydraulically the position of the rake (8, 9).

9. A direct sowing machine of claim 1, **characterised in that** it comprises means (16) for adjusting the force with which the rake (8, 9) is pressed against the soil (2).

## Patentansprüche

1. Direktsaatmaschine, die sich aus Pflugmesserkonstruktionen (3) inklusive Pflugmesserscheiben (4) zusammensetzt, um Furchen in den Boden zu schneiden und zu öffnen, um Samen in diese zu führen, **dadurch gekennzeichnet, dass** sie vor den Pflugmesserkonstruktionen (3) einen Rechen (8, 9, 10, 11, 12, 17, 18, 20) hat, um Strohreste oder ähnliche Stoffe vor den Pflugmesserscheiben einzuebnen und zu entfernen.

2. Direktsaatmaschine gemäß Anspruch 1, **dadurch gekennzeichnet, dass** der Rechen sich wesentlich aus Zacken (8, 9) besteht, die sich in einer oder mehreren Reihen befinden.

3. Direktsaatmaschine gemäß Anspruch 2, **dadurch gekennzeichnet, dass** für eine Pflugmesserscheibe (4) eine entsprechende Zacke (9) ist, die bei der Pflugmesserscheibe platziert ist.

4. Direktsaatmaschine gemäß Anspruch 2, **dadurch gekennzeichnet, dass** die Zacken (9) schräg nach hinten gerichtet sind.

5. Direktsaatmaschine gemäß Anspruch 2, **dadurch gekennzeichnet, dass** die Zacken (9) seitlich am horizontalen Rahmen (8) befestigt sind.

6. Direktsaatmaschine gemäß Anspruch 2, **dadurch gekennzeichnet, dass** die Zacken (9) mit einer flexiblen Konstruktion (11) versehen sind.

7. Direktsaatmaschine gemäß Anspruch 1, **dadurch gekennzeichnet, dass** der Rechen schwebend (12 , 13, 14, 15, 16, 17, 18, 19, 20) an der Saatmaschine aufgehängt ist.

8. Direktsaatmaschine gemäß Anspruch 1, **dadurch gekennzeichnet, dass** sie Mittel (13) zur hydraulischen Einstellung der Position des Rechens (8, 9) enthält.

9. Direktsaatmaschine gemäß Anspruch 1, **dadurch gekennzeichnet, dass** sie Mittel (16) zur Einstellung der Kraft, mit der der Rechen (8, 9) sich gegen den Boden (2) drückt, enthält.

## Revendications

1. Semoir direct comprenant des structures de coutre (3) incluant des disques (4) pour couper et ouvrir des sillons dans la terre afin d'y introduire la semence, **caractérisé en ce qu'**il comprend un râteau (8, 9, 10, 11, 12, 17, 18, 20) devant les structures de coutre (3) pour aplanir et enlever les résidus de paille et autre matières similaires du chemin du coutre à disques.

2. Semoir direct selon la revendication 1, **caractérisé en ce que** le râteau est constitué de dents (8, 9) placées en une ou plusieurs rangées.

3. Semoir direct selon la revendication 2, **caractérisé en ce qu'**à chaque disque du coutre (4) correspond une dent (9) qui est alignée avec le disque à coutre.

4. Semoir direct selon la revendication 2, **caractérisé en ce que** les râteaux (9) sont positionnées obliquement en arrière.

5. Semoir direct selon la revendication 2, **caractérisé en ce que** les râteaux (9) sont fixés sur des cadres horizontaux (8).

6. Semoir direct selon la revendication 2, **caractérisé en ce que** les râteaux (9) sont munis d'une structure flexible (11).

7. Semoir direct selon la revendication 1, **caractérisé en ce que** le râteau est suspendu après le semoir de manière flottante (12, 13, 14, 15, 16, 17, 18, 19, 20).

8. Semoir direct selon la revendication 1, **caractérisé en ce qu'**il comprend des moyens (13) pour régler hydrauliquement la position du râteau (8, 9).

9. Semoir direct selon la revendication 1, **caractérisé en ce qu'**il comprend des moyens (16) pour régler la force avec laquelle le râteau (8, 9) s'appuie contre le sol (2).
